(19)

Europäisches
Patentamt
European
Patent Office
Office européen
des brevets

(11) **EP 4 052 869 A1**

(12) # EUROPEAN PATENT APPLICATION
published in accordance with Art. 153(4) EPC

(43) Date of publication:
**07.09.2022 Bulletin 2022/36**

(21) Application number: **20883351.7**

(22) Date of filing: **23.10.2020**

(51) International Patent Classification (IPC):
**B25J 13/00** $^{(2006.01)}$

(52) Cooperative Patent Classification (CPC):
**B25J 13/00; G06N 20/00**

(86) International application number:
**PCT/JP2020/040002**

(87) International publication number:
**WO 2021/085345 (06.05.2021 Gazette 2021/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.10.2019 PCT/JP2019/042216**

(71) Applicant: **Kabushiki Kaisha Yaskawa Denki Kitakyushu-shi, Fukuoka 806-0004 (JP)**

(72) Inventor: **TACHIKAKE, Hiroki Kitakyushu-shi, Fukuoka 806-0004 (JP)**

(74) Representative: **Grünecker Patent- und Rechtsanwälte PartG mbB Leopoldstraße 4 80802 München (DE)**

(54) **MACHINE LEARNING DATA GENERATION DEVICE, MACHINE LEARNING DEVICE, WORK SYSTEM, COMPUTER PROGRAM, MACHINE LEARNING DATA GENERATION METHOD, AND METHOD FOR MANUFACTURING WORK MACHINE**

(57) Provided is a machine learning data generation device (1) including: a virtual sensor input generator (102) configured to generate a virtual sensor input, which is obtained by virtually generating a sensor input obtained as a result of performing sensing, by a sensor of a work machine (4), on a plurality of randomly piled subjects to be subjected to physical work by an operating machine (403) of the work machine (4), based on virtual subject models, which are virtual models of the plurality of randomly piled subjects; a virtual operation command generator configured to generate a virtual operation command, which is obtained by virtually generating an operation command for the operating machine of the work machine (4), depending on at least one of the virtual subject models or the virtual sensor input; a virtual operation outcome evaluator (116) configured to evaluate an outcome of the physical work performed by the operating machine (403) of the work machine in response to the virtual operation command in a virtual space; and a machine learning data generator (106) configured to generate machine learning data based on the virtual sensor input, the virtual operation command, and the evaluation of the virtual operation outcome evaluator.

FIG.1

**Description**

Technical Field

The present invention relates to a machine learning data generation device, a machine learning device, a work system, a computer program, a machine learning data generation method, and a method of manufacturing a work machine.

Background Art

In Patent Literature 1, there is described a machine learning device configured so that the machine learning device outputs a control command based on a depth image taken by a three-dimensional measurement device, a robot performs work based on the control command when there is no problem in an execution result of simulation based on the control command, and inputting of a control command to the robot is stopped and a result label is provided to a machine learning unit as training data to perform further learning when there is a problem.

Citation List

Patent Literature

[PTL 1] JP 2017-185577 A

Summary of Invention

Technical Problem

In a work machine, which is an automatic machine that performs physical work on subjects repetitively and continuously, in order to perform operation depending on the subjects with use of machine learning, it is required to perform the machine learning with machine learning data corresponding to various manners of the subjects that can occur in reality. However, in a case in which an outcome of the physical work is not obvious from the subjects and operations expected for the subjects, it is required to prepare various subjects in reality and actually operate a real machine to perform the machine learning. Consequently, enormous effort and time have been required in some cases.

The present invention has been made in view of the above-mentioned circumstances, and therefore has an object to obtain machine learning data reflecting an outcome of physical work without requiring physical work in reality.

Solution to Problem

According to one aspect of the present invention, there is provided a machine learning data generation device including: a virtual sensor input generator configured to generate a virtual sensor input, which is obtained by virtually generating a sensor input obtained as a result of performing sensing, by a sensor of a work machine, on a plurality of randomly piled subjects to be subjected to physical work by an operating machine of the work machine, based on virtual subject models which are virtual models of the plurality of randomly piled subjects; a virtual operation command generator configured to generate a virtual operation command which is obtained by virtually generating an operation command for the operating machine of the work machine depending on at least one of the virtual subject models or the virtual sensor input; a virtual operation outcome evaluator configured to evaluate an outcome of the physical work performed by the operating machine of the work machine in response to the virtual operation command in a virtual space; and a machine learning data generator configured to generate machine learning data based on the virtual sensor input, the virtual operation command, and the evaluation of the virtual operation outcome evaluator.

Further, in the machine learning data generation device according to one aspect of the present invention, the virtual operation outcome evaluator may include: a simulator configured to execute computer simulation of the physical work based on the virtual operation command with use of a virtual operating machine model which is a virtual model of the operating machine, and the virtual subject models; and an achievement status evaluator configured to evaluate an achievement status of an object of the physical work based on a result of the computer simulation, and the machine learning data generation device may be configured to use the achievement status as the evaluation of the virtual operation outcome evaluator.

Further, in the machine learning data generation device according to one aspect of the present invention, the virtual operation outcome evaluator may include an interference evaluator configured to evaluate presence or absence of interference between the operating machine and the virtual subject models during execution of the physical work in a virtual space, and the machine learning data generation device may be configured to use the presence or absence of interference as the evaluation of the virtual operation outcome evaluator.

According to another aspect of the present invention, there is provided a machine learning data generation device including: a virtual sensor input generator configured to generate a virtual sensor input, which is obtained by virtually generating a sensor input obtained as a result of performing sensing, by a sensor of a work machine, on a subject to be subjected to physical work by an operating machine of the work machine, based on a virtual subject model which is a virtual model of the subject; a virtual operation command generator configured to generate a virtual operation command which is obtained by virtually generating an operation command for the operating machine of the work machine depending on at least one of the virtual subject model or the virtual sensor input; a simulator configured to execute computer simulation of the physical work based on the virtual operation command with use of a virtual operating machine model which is a virtual model of the operating machine, and the virtual subject model; an achievement status evaluator configured to evaluate an achievement status of an object of the physical work based on a result of the computer simulation; and a machine learning data generator configured to generate machine learning data based on the virtual sensor input, the virtual operation command, and the achievement status.

The machine learning data generation device according to one aspect of the present invention may further include a virtual model generator configured to generate the virtual subject models for a plurality of variations of the plurality of randomly piled subjects.

According to one aspect of the present invention, there is provided a machine learning device including: any one of the above-mentioned machine learning data generation devices; and a learning unit configured to cause an operation command generation neural network model, which is a neural network to which the sensor input is input and from which the operation command is output, to learn based on the machine learning data depending on the evaluation of the virtual operation outcome evaluator.

In the machine learning device according to one aspect of the present invention, the learning unit may include a learning permission/prohibition determinator configured to determine permission/prohibition of learning with the machine learning data depending on the evaluation of the virtual operation outcome evaluator.

In the machine learning device according to one aspect of the present invention, the learning unit may include a learning direction determinator configured to determine whether learning with the machine learning data is learning in a positive direction or learning in a negative direction depending on the evaluation of the virtual operation outcome evaluator.

In the machine learning device according to one aspect of the present invention, the learning unit may include a learning intensity determinator configured to determine an intensity of learning with the machine learning data depending on the evaluation of the virtual operation outcome evaluator.

In The machine learning data generation device according to one aspect of the present invention, the virtual operation command generator may include a virtual operation command generation neural network model, which is a neural network model to which the virtual sensor input is input and from which the virtual operation command is output.

In the machine learning device according to one aspect of the present invention, the virtual operation command generator may include a virtual operation command generation neural network model, which is a neural network model to which the virtual sensor input is input and from which the virtual operation command is output.

In the machine learning device according to one aspect of the present invention, the virtual operation command generation neural network model may be the same as the operation command generation neural network model, or the virtual operation command generation neural network model may be updated by the operation command generation neural network model learned in the learning unit.

According to one aspect of the present invention, there is provided a work system including: any one of the above-mentioned machine learning devices; and the work machine including: the operating machine; the sensor; and an operation command generator, which includes the neural network model learned by the learning unit of the machine learning device, to which a sensor input from the sensor is input, and from which an operation command for the operating machine is output.

According to one aspect of the present invention, there is provided a computer program for causing a computer to operate as a machine learning data generation device, the machine learning data generation device including: a virtual sensor input generator configured to generate a virtual sensor input, which is obtained by virtually generating a sensor input obtained as a result of performing sensing, by a sensor of a work machine, on a plurality of randomly piled subjects to be subjected to physical work by an operating machine of the work machine based on virtual subject models which are virtual models of the plurality of randomly piled subjects; a virtual operation command generator configured to generate a virtual operation command which is obtained by virtually generating an operation command for the operating machine of the work machine depending on at least one of the virtual subject models or the virtual sensor input; a virtual operation outcome evaluator configured to evaluate an outcome of the physical work performed by the operating machine of the work machine in response to the virtual operation command in a virtual space; and a machine learning data generator configured to generate machine learning data based on the virtual sensor input, the virtual operation command, and the evaluation of the virtual operation outcome evaluator.

According to one aspect of the present invention, there is provided a machine learning data generation method including: generating a virtual sensor input, which is obtained by virtually generating a sensor input obtained as a result of performing sensing, by a sensor of a work machine, on a plurality of randomly piled subjects to be subjected to physical work by an operating machine of the work machine based on virtual subject models which are virtual models of the plurality of randomly piled subjects; generating a virtual operation command which is obtained by virtually generating an operation command for the operating machine of the work machine depending on at least one of the virtual subject models or the virtual sensor input; evaluating an outcome of the physical work performed by the operating machine of the work machine in response to the virtual operation command in a virtual space; and generating machine learning data based on the virtual sensor input, the virtual operation command, and the evaluation.

According to one aspect of the present invention, there is provided a method of manufacturing a work machine, the work machine including: an operating machine configured to perform physical work on a plurality of randomly piled subjects; a sensor configured to perform sensing on the plurality of randomly piled subjects to obtain a sensor input; and an operation command generator configured to input the sensor input to a neural network model to obtain an operation command for the operating machine, the method including: generating a virtual sensor input, which is obtained by virtually generating the sensor input, based on virtual subject models which are virtual models of the plurality of randomly piled subjects; generating a virtual operation command which is obtained by virtually generating the operation command depending on at least one of the virtual subject models or the virtual sensor input; evaluating an outcome of the physical work performed by the operating machine of the work machine in response to the virtual operation command in a virtual space; generating machine learning data based on the virtual sensor input, the virtual operation command, and the evaluation; and causing the neural network model to learn based on the machine learning data.

Brief Description of Drawings

FIG. 1 is a functional block diagram for illustrating an overall configuration of a machine learning device including a machine learning data generation device according to a concept common to embodiments of the present invention.

FIG. 2 is a functional block diagram for illustrating an overall configuration of a machine learning device including a machine learning data generation device according to a first embodiment of the present invention.

FIG. 3 is a diagram for illustrating an example of a hardware configuration of the machine learning data generation device and the machine learning device.

FIG. 4 is an outside view for illustrating an example of a work machine assumed in the machine learning data generation device and the machine learning device according to this embodiment.

FIG. 5 is a configuration diagram for illustrating functional components of the work machine illustrated in FIG. 4.

FIG. 6 is a configuration diagram for illustrating an example detailed configuration of a virtual model generator in the first embodiment of the present invention.

FIG. 7 is a diagram for illustrating a VAE.

FIG. 8 is a configuration diagram for illustrating an example configuration of a virtual sensor input generator in the first embodiment of the present invention.

FIG. 9 is a diagram for illustrating a GAN.

FIG. 10 is a diagram for illustrating an example of a configuration of machine learning data generated by the machine learning data generation device.

FIG. 11 is a configuration diagram for illustrating a configuration of a learning unit.

FIG. 12 is a diagram for illustrating examples of various shapes of a filter.

FIG. 13 is a flow chart of a machine learning data generation method and a machine learning method performed by the machine learning data generation device and the machine learning device according to the first embodiment of the present invention.

FIG. 14 is a functional block diagram for illustrating an overall configuration of a machine learning device including a machine learning data generation device according to a second embodiment of the present invention.

FIG. 15 is a functional block diagram for illustrating an overall configuration of a machine learning device including a machine learning data generation device according to a third embodiment of the present invention.

FIG. 16 is a view for illustrating specifics of physical work related to the machine learning device including the machine learning data generation device according to the third embodiment of the present invention.

FIG. 17 shows an example of target values given to a virtual operation command generator.

FIG. 18 is a diagram for illustrating examples of target values, which are generated virtual operation commands.

FIG. 19 is a view for illustrating how presence or absence of interference in a virtual space is evaluated.

FIG. 20 is a diagram for schematically illustrating examples of answer data obtained by incorporating evaluation into the target values.

FIG. 21 is a view for illustrating a method of evaluating the presence or absence of interference with use of two cross sections.

FIG. 22 is a flow chart for illustrating steps of manufacturing a work machine.

Description of Embodiments

Various embodiment modes are assumed for the present invention, and description is given below while exemplifying embodiments corresponding to those modes, but first, the outline of a concept common to the embodiments is described.

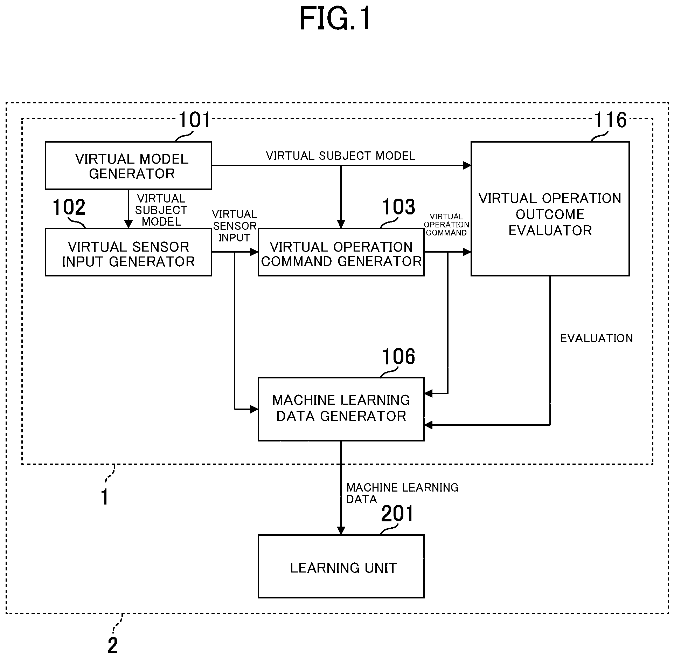

FIG. 1 is a functional block diagram for illustrating an overall configuration of a machine learning device 2 including a machine learning data generation device 1 according to the concept common to the embodiments of the present invention.

The machine learning data generation device 1 includes: a virtual model generator 101 which generates virtual subject models of a plurality of randomly piled subjects to be subjected to physical work by an operating machine of a work machine; a virtual sensor input generator 102 which generates a virtual sensor input, which is obtained by virtually generating a sensor input obtained as a result of performing sensing, by a sensor of the work machine, based on the virtual subject models; a virtual operation command generator 103 which generates a virtual operation command, which is obtained by virtually generating an operation command for the operating machine of the work machine, depending on at least one of the virtual subject models or the virtual sensor input; a virtual operation outcome evaluator 116 which evaluates an outcome of the physical work performed by the operating machine of the work machine in response to the virtual operation command in a virtual space; and a machine learning data generator 106 which generates machine learning data based on the virtual sensor input, the virtual operation command, and the evaluation of the virtual operation outcome evaluator 116.

The machine learning device 2 further includes a learning unit 201 in addition to the machine learning data generation device 1 described above.

Details of the functions of the machine learning device 2 described above as the functional blocks become clear in the following description of the embodiments.

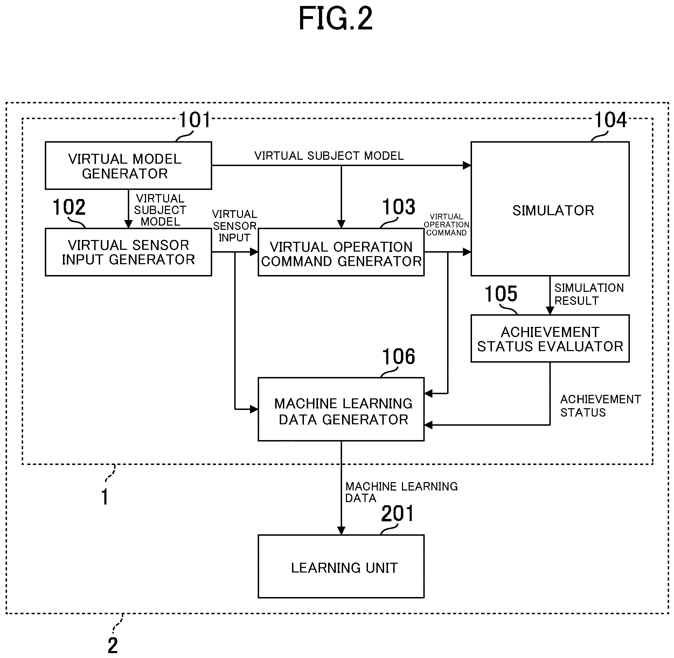

Next, a machine learning data generation device, a machine learning device, a computer program, and a machine learning data generation method according to a first embodiment of the present invention are described with reference to FIG. 2 to FIG. 13.

FIG. 2 is a functional block diagram for illustrating an overall configuration of a machine learning device 2 including a machine learning data generation device 1 according to the first embodiment of the present invention. The term "machine learning data generation device" as used herein refers to a device which generates machine learning data, which is teacher data to be used in learning in a machine learning model in which supervised learning is performed, and the term "machine learning device" refers to a device which executes the learning of the machine learning model with use of the machine learning data.

The machine learning data generation device 1 and the machine learning device 2 may be provided physically as independent devices, but without being limited thereto, may be incorporated as a part of other machines or devices, or may be configured appropriately using physical components of other machines or devices as required. More specifically, the machine learning data generation device 1 and the machine learning device 2 may be implemented by software with use of a general computer, and computer programs for causing the computer to operate as the machine learning data generation device 1 and the machine learning device 2 may be integrated with each other, may be executed independently, or further may be incorporated as modules into other software. Alternatively, the machine learning data generation device 1 and the machine learning device 2 may be built on what is called a server computer, and only functions thereof may be provided to a remote site via a public telecommunication line, for example, the Internet.

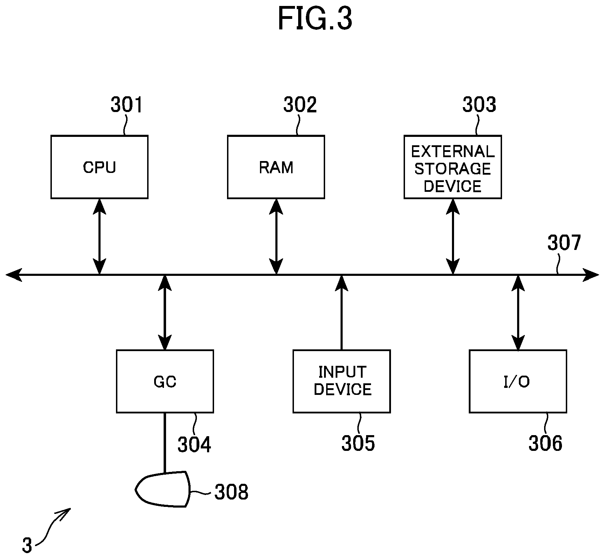

FIG. 3 is a diagram for illustrating an example of a hardware configuration of the machine learning data generation device 1 and the machine learning device 2. The figure shows a general computer 3, in which a central processing unit (CPU) 301, which is a processor, a random access memory (RAM) 302, which is a memory, an external storage device 303, a graphics controller (GC) 304, an input device 305, and input/output (I/O) 306 are connected by a data bus 307 so that electric signals can be exchanged there among. The hardware configuration of the computer 3 described above is merely an example, and another configuration may be employed.

The external storage device 303 is a device in which information can be recorded statically, for example, a hard disk drive (HDD) or a solid state drive (SSD). Further, a signal from the GC 304 is output to a monitor 308, for example, a cathode ray tube (CRT) or what is called a flat panel display, on which a user visually recognizes an image, and the signal is displayed as an image. The input device 305 is one or a plurality of devices, for example, a keyboard, a mouse, and a touch panel, to be used by the user to input information, and the I/O 306 is one or a plurality of interfaces to be used by the computer 3 to exchange information with external devices. The I/O 306 may include various ports for wired connection, and a controller for wireless connection.

Computer programs for causing the computer 3 to function as the machine learning data generation device 1 and the machine learning device 2 are stored in the external storage device 303, and are read out by the RAM 302 and executed by the CPU 301 as required. In other words, the RAM 302 stores codes for achieving various functions illustrated as the functional blocks in FIG. 2 by being executed by the CPU 301. Such computer programs may be provided by being recorded on an appropriate optical disc or magneto-optical disk, or an appropriate computer-readable information recording medium, for example, a flash memory, or may be provided via the I/O 306 through an external information communication line, for example, the Internet.

Returning to FIG. 2, the machine learning data generation device 1 includes, as its functional components, the virtual model generator 101, the virtual sensor input generator 102, the virtual operation command generator 103, a simulator 104, an achievement status evaluator 105, and the machine learning data generator 106. Further, the machine learning device 2 includes the machine learning data generation device 1 and the learning unit 201.

The machine learning data generation device 1 is prepared to correspond to a particular work machine which performs the physical work, and has functions closely related to the work machine. Further, the machine learning device 2 performs learning on the machine learning model used by the work machine.

The term "physical work" as used in the present application refers to work that exerts some physical action on the subjects. The physical work includes various kinds of work, for example, picking up of components and parts, mounting of a component (for example, insertion of a bearing to a housing, or fastening of a screw), packaging (for example, box packing of confectionery or other such food), various processing (for example, deburring, grinding, or other such metal processing, molding or cutting of food or other such soft objects, resin molding, or laser processing), coating, and cleaning. Still further, the term "work machine" refers to an automatic machine which performs equivalent or similar physical work repetitively and continuously.

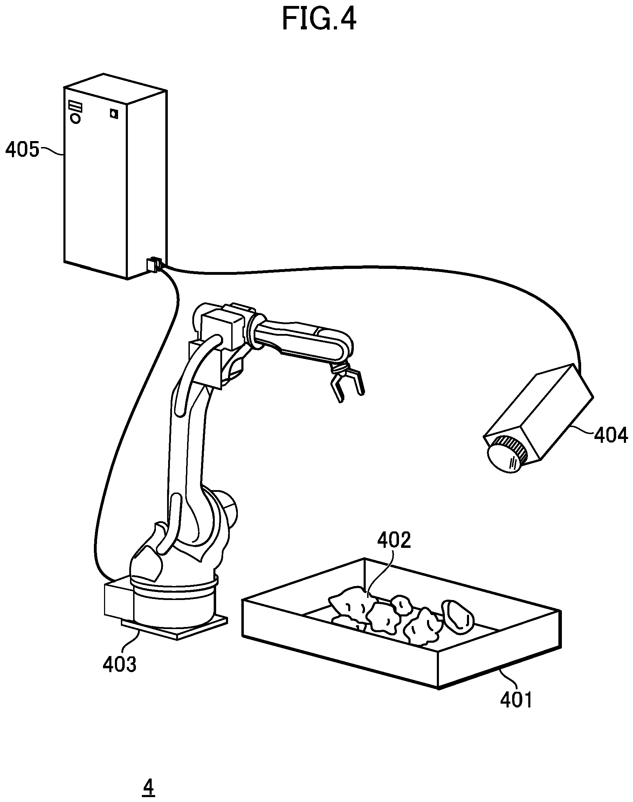

The machine learning data generation device 1 and the machine learning device 2 according to this embodiment are built to specifically correspond to a work machine which performs particular physical work. It is not particularly limited that what kind of work is the physical work, and in what application the work machine is used, but for the purpose of facilitating understanding of the following description, an example of the work machine assumed in the machine learning data generation device 1 and the machine learning device 2 according to this embodiment is shown in FIG. 4.

FIG. 4 is an outside view for illustrating an example of the work machine 4 assumed in the machine learning data generation device 1 and the machine learning device 2 according to this embodiment. In this example, the work machine 4 is mechanical equipment which grips a subject 402, which is a piece of fried chicken put in a rack 401, which is a tray, by an operating machine 403, which is a robot, and transports the subject to another step (not shown; for example, packaging in a container). A position and a shape of the subject 402 are captured as image data by a sensor 404, which is a video taking apparatus, and operation of the operating machine 403 is controlled by a controller 405 based on the image data.

In the present application, the term "subject" refers to a physical entity to be subjected to the physical work. Further, the rack 401 on which the subject 402 is placed is not limited to the tray, and may be any rack, for example, a conveyer, a hopper, an automatic vise, or an autonomous travel vehicle, which corresponds to the physical work or the subject 402. The sensor 404 is provided to perform some sensing on the subjects 402 to obtain a sensor input, which is information required for the operating machine 403 to execute the physical work. The sensor 404 may also be any sensor which corresponds to the physical work or the subject, and may not necessarily be a sensor which provides the image data as the sensor input as in this example. The operating machine 403 is a machine including an action end which exerts the physical action on the subject when the physical work is performed on the subject 402, and a machine corresponding to the physical work is prepared. In the example illustrated in FIG. 4, a general-purpose vertical articulated robot is illustrated as the operating machine 403, but the operating machine 403 may not necessarily use what is called an industrial robot.

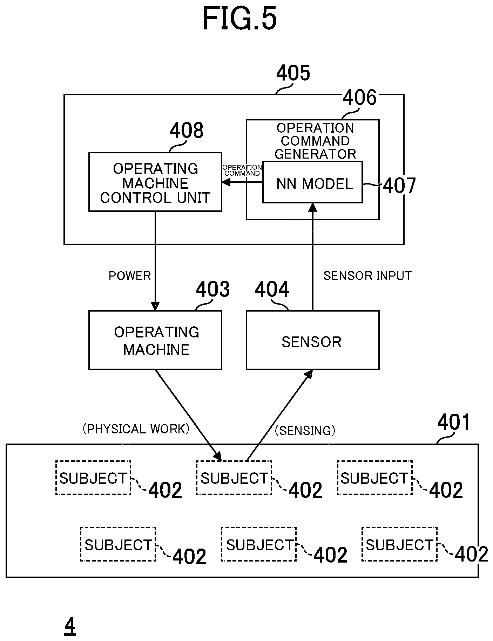

FIG. 5 is a configuration diagram for illustrating functional components of the work machine 4 illustrated in FIG. 4. In the figure, the subjects 402 are not elements forming the work machine 4, and hence are illustrated by broken lines. As illustrated in FIG. 5, the sensor 404 performs sensing on the subjects 402 on the rack 401, and inputs the sensor input obtained as a result of the sensing to the controller 405. Further, the operating machine 403 performs the physical work on the subjects 402.

The controller 405 has various functions required to control the operating machine 403 to perform the physical work based on the sensor input, and of those functions, FIG. 5 shows a part having a function of generating the operation command for the operating machine 403 as an operation command generator 406, and a part having a function of controlling the operating machine 403 by supplying appropriate power and the like thereto as an operating machine control unit 408.

The operation command means an operation command for the operating machine 403 that changes depending on a state of the subjects 402 detected by the sensor 404. When the subjects 402 are amorphous and soft fried chicken as in this example, the operation command may be target coordinates for gripping by the operating machine 403 (target position and target angle of a robot hand) and gripping force (and/or amount of pinching by the robot hand), or may further include a movement path of the robot hand and other commands. The operating machine control unit 408 is, in this example, a part having a function corresponding to what is called a robot controller, and performs power supply and feedback control required to operate the operating machine 403 in accordance with the operation command.

In other words, the term "operation command" as used herein may not necessarily refer to an instruction per se executed by the operating machine control unit 408 to operate the operating machine 403, but may be an indirect command for generating such an instruction. The above-mentioned target coordinates are a representative example thereof.

When the subjects 402 are not only indefinite as to positions and postures thereof on the rack 401, but also have amorphous shapes, and further softness as in this example, it is difficult to obtain appropriate operation command by a deterministic algorithm. It is generally known that, for a problem that is hard to obtain an appropriate answer by a deterministic algorithm, there are cases in which an appropriate answer may be obtained with high probability by using machine learning on an appropriately designed machine learning model to learn with appropriate machine learning data. Consequently, the operation command generator 406 in this example includes a neural network model 407 which is a machine learning model, so that the sensor input is input to the neural network model 407 after being subjected to appropriate preprocessing as required, and the operation command is obtained as an output. The neural network model 407 may have learned by what is called a deep learning method.

As described above, in the work machine 4, the operation command is generated by the operation command generator 406 including the neural network model 407 that has learned appropriately, to thereby obtain the operation command for performing the physical work with high probability for the subjects 402 that are difficult to obtain an appropriate operation command by a deterministic algorithm.

However, as can be easily understood by the example of fried chicken described in this example, it is not easy to actually prepare a sufficient number of sets of appropriate machine learning data for causing the neural network model 407 of the operation command generator 406 to learn sufficiently. This is because, in terms of this example, to actually prepare the machine learning data means nothing but to prepare a sufficient number of subjects 402 having various shapes and sizes, that is, pieces of fried chicken, for the machine learning. Further, if the subjects 402 are prepared, it is impossible or difficult to obtain an appropriate operation command for the subjects 402 by a deterministic algorithm, and hence it is required to cause the operating machine 403 to operate on each of the subjects 402, and evaluate results of the operation to obtain the machine learning data. However, too much time and cost are required to obtain a sufficient number of sets of the machine learning data, and hence such operation is unrealistic.

The machine learning data generation device 1 according to this embodiment is configured to virtually execute the physical work on the subjects 402 by the work machine 4 described above, to thereby generate the sufficient number of sets of machine learning data for the neural network model with realistic time and cost. Further, the machine learning device 2 according to this embodiment is configured to cause the neural network model to learn with the thus-generated machine learning data.

Returning again to FIG. 2, the functional blocks of the machine learning data generation device 1 and the machine learning device 2 are described in detail.

First, the virtual model generator 101 is a part for generating virtual subject models for a plurality of variations of the subjects 402. Here, the subjects 402 are physical entities to be subjected to the expected physical work as described above, and shapes, sizes, and physical characteristics thereof are not necessarily constant, and have some unevenness. The virtual model generator 101 generates the variations of a large number of subjects 402 caused by such unevenness as virtual models without producing the subjects in reality. The generated virtual models of the subjects 402 are hereinafter referred to as "virtual subject models." The virtual subject models are used for simulation in the simulator 104 which is to be described later, and hence are required to be models having information required to perform such simulation. In this example, the virtual subject model is a three-dimensional model for which a shape and a size are determined, and for which physical characteristics such as a weight (specific gravity), an elastic modulus, and a friction coefficient are further set.

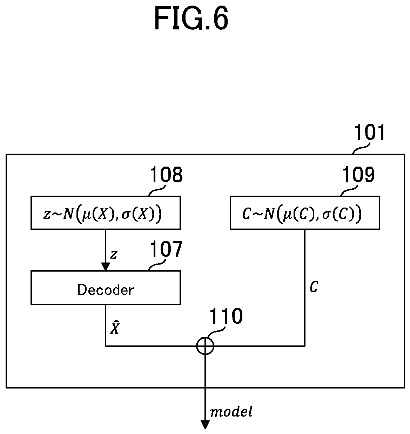

FIG. 6 is a configuration diagram for illustrating an example detailed configuration of the virtual model generator 101 in this embodiment. In this example, the virtual model generator 101 uses a technology known as a variational autoencoder (VAE). For that reason, the virtual model generator 101 includes a decoder 107 obtained by the VAE.

To the decoder 107, a latent variable "z" generated by a latent variable generator 108 is input. The latent variable "z" is a vector quantity, and a number of dimensions thereof may be several ten to several hundred dimensions, although the number of dimensions depends on complexity of the subjects 402. The latent variable generator 108 in this example is configured to generate the latent variable "z" stochastically in accordance with a normal distribution N.

The decoder 107 is a neural network which outputs three-dimensional models X^ of the subjects 402 that correspond to the input latent variable "z". As a result, the three-dimensional models X^ of the subjects 402 are generated stochastically.

Further, a feature amount generator 109 generates physical characteristics C (in this meaning, a weight, an elastic modulus, a friction coefficient, and the like) of each virtual subject model stochastically in accordance with the normal distribution N. In a combiner 110, the generated three-dimensional model X^ and the physical characteristics C are combined to generate and output the virtual subject model.

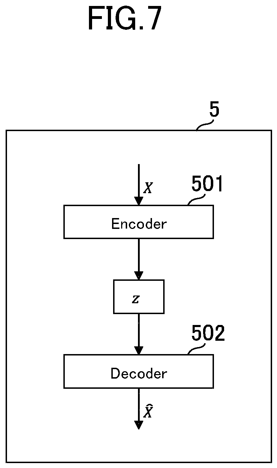

Now, referring to FIG. 7, the VAE is briefly described. The VAE per se is known, and hence description thereof is given minimally.

A VAE 5 has a configuration illustrated in FIG. 7, and includes two neural networks referred to as an encoder 501 and a decoder 502. The encoder 501 receives input of data X, and outputs the latent variable "z". Stated differently, it can be said that the data X having a large amount of information is compressed to the latent variable "z" having a lower number of dimensions focusing on its intrinsic feature. Then, the latent variable "z" is designed to follow the normal distribution N in the VAE.

The decoder 502 receives input of the latent variable "z", and outputs reconstructed data X^. Then, each of the encoder 501 and the decoder 502 learns so that the data X and the reconstructed data X^ match. In terms of this example, the data X is three-dimensional data of real subjects 402, and is obtained by, for example, digitizing shapes and sizes of real fried chicken by three-dimensional scan or another method. In other words, the encoder 501 and the decoder 502 are caused to learn in advance with use of the data X of some feasible number of subjects 402 having different shapes.

The latent variable "z" follows the normal distribution N, and hence when the latent variable "z" generated stochastically without using the encoder 501 is input to the decoder 502, the reconstructed data X^ is generated as if the subjects 402 existed in reality. Accordingly, in the virtual model generator 101 illustrated in FIG. 6, the thus-learned decoder 107 is used to generate the three-dimensional model X^ as the reconstructed data.

Returning to FIG. 2, the virtual sensor input generator 102 generates the virtual sensor input based on the virtual subject model. Here, the sensor input is information obtained by sensing the subjects 402 by the sensor 404 as described above with reference to FIG. 4, and the virtual sensor input is information virtually generated as corresponding to the sensor input. In other words, it can also be said that the virtual sensor input is virtually implementation of the sensor input to be obtained by the sensor 404 when the virtual subject models are the subjects 402 that exist in reality.

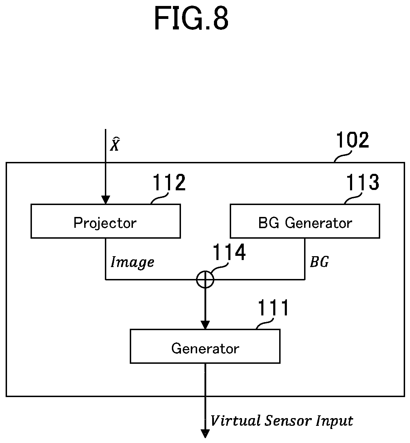

FIG. 8 is a configuration diagram for illustrating an example configuration of the virtual sensor input generator 102 in this embodiment. In this example, the virtual sensor input generator 102 uses a technology known as a generative adversarial network (GAN). Thus, the virtual sensor input generator 102 includes a generator 111 obtained by the GAN.

Of virtual subject models input to the virtual sensor input generator 102, the three-dimensional models X^ are input to a projector 112, and a planar projection image of the three-dimensional models X^ is generated. Here, the projector 112 generates a planar projection image that is probable in reality considering a probable distance between the sensor 404 and the subject 402 and the posture of the subject 402 in accordance with an actual configuration of the work machine 4.

An example of a method of generating such a planar projection image includes stochastically setting a distance and an angle of a virtual screen simulating the sensor 404 which is the video taking apparatus, and the three-dimensional model X^. Further, it is desired that a posture of the three-dimensional model X^ be limited to a posture that is probable in reality (for example, mechanically instable postures are eliminated). Still further, a planar projection image may be generated so as to include a plurality of three-dimensional models X^, or a plurality of planar projection images may be generated from one or a plurality of three-dimensional models X^.

Further, a background image is generated separately by a background image generator 113. The background image generator 113 is configured to generate a background image that is feasible in reality in the work machine 4, and an example of the method includes selecting stochastically one of a plurality of real pictures of the rack 401 of the work machine 4. The obtained planar projection image and a synthetic image are synthesized by a synthesizer 114 to obtain a synthetic image.

The synthetic image is input to the generator 111. The generator 111 is a neural network which outputs, from the input synthetic image, a virtual sensor input that is as close as a sensor input that is obtained by a real sensor 404. As a result, a virtual sensor input which is indiscernible from a real sensor input is obtained based on the stochastically generated virtual subject models.

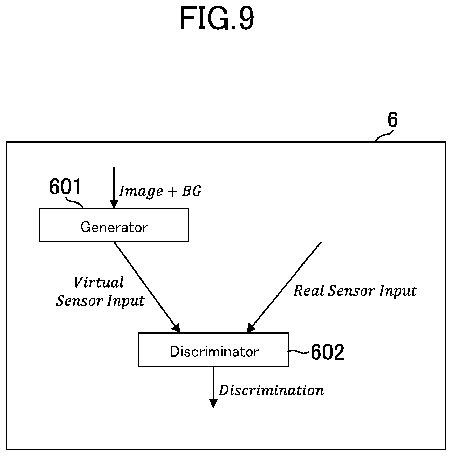

Now, referring to FIG. 9, the GAN is briefly described. The GAN per se is also known, and hence description thereof is given minimally.

A GAN 6 has a configuration illustrated in FIG. 9, and includes two neural networks referred to as a generator 601 and a discriminator 602. As described above, the generator 601 receives input of the synthetic image, and outputs the virtual sensor input. Meanwhile, to the discriminator 602, both the virtual sensor input generated by the generator 601 and a real sensor input obtained by a real sensor 404 are input. At this time, the discriminator 602 is not notified of whether the input data is the virtual sensor input or the real sensor input.

The output of the discriminator 602 is to discriminate whether the input data is the virtual sensor input or the real sensor input. Then, in the GAN 6, reinforcement learning is performed repetitively for some virtual sensor inputs and real sensor inputs prepared in advance, so that both are correctly discriminated in the discriminator 602, and so that both cannot be discriminated by the discriminator 602 in the generator 601.

This eventually results in a state in which both cannot be discriminated by the discriminator 602 (for example, when the same number of virtual sensor inputs and real sensor inputs are prepared, a percentage of correct answers is 50%), and under such a state, it is considered that the generator 601 outputs a virtual sensor input that is indiscernible from the real sensor input and is as close as a real sensor input, based on the synthetic image. Consequently, in the virtual sensor input generator 102 illustrated in FIG. 8, the virtual sensor input is generated with use of the generator 111 that has learned as described above.

The configurations of the virtual model generator 101 and the virtual sensor input generator 102 described above are merely an example, and may adopt appropriate configurations corresponding to the work machine 4 assumed by the machine learning data generation device 1 and the machine learning device 2. For example, the virtual model generator 101 may be configured to generate the virtual subject models by a predetermined algorithm based on a parameter that is simply determined by a random number, instead of using the VAE. Further, the virtual sensor input generator 102 may be configured to generate a virtual sensor input with use of known methods of computer graphics, such as ray tracing and photorealistic rendering, instead of using the GAN. Further, when the expected subjects 402 and the sensor 404 are different, a virtual model generator 101 and a virtual sensor input generator 102 having configurations suitable therefor should naturally be adopted. The configurations of the virtual model generator 101 and the virtual sensor input generator 102 described in this embodiment are particularly effective when the subjects 402 have uneven three-dimensional profiles, and when the sensor 404 is the video taking apparatus.

Returning to FIG. 2, the virtual operation command generator 103 generates the virtual operation command depending on at least one of the virtual subject models or the virtual sensor input. As described above, in this example, the operation command is an operation command for the operating machine 403 that changes depending on the state of the subjects 402 detected by the sensor 404 in the work machine 4, and the virtual operation command is obtained by virtually generating the operation command.

The virtual operation command generated in the virtual operation command generator 103 may be generated by a deterministic algorithm as opposed to the operation command generator 406 of the work machine 4. It is required of the virtual operation command that, if the virtual subject model was a real subject 402, there be high possibility that the physical work can be executed on the subject 402. It is not necessarily required that the physical work be executed successfully in reality, or as described later, in simulation by the virtual operation command.

In this example, the virtual operation command generator 103 uses both the virtual subject model and the virtual sensor input to determine by computation, from the virtual subject model, a center of gravity, a uniaxial direction, and a length in the uniaxial direction thereof, convert the center of gravity and the uniaxial direction into coordinates of the operating machine 403 from the virtual sensor input and set the coordinates as the target position, and calculate the gripping force of the robot hand from the length in the uniaxial direction. With use of the virtual subject model as described above, the virtual operation command having high possibility that the physical work can be executed successfully is generated relatively easily and uniquely.

It should be understood that the method of generating the virtual operation command is not limited to the method described above, and may be other methods. The other methods may be those using a deterministic algorithm as in the exemplified method, or may be those by means of a nondeterministic algorithm as described later.

Further, the other methods may be those assisted by an operator (person). For example, it is also possible to select a method in which the operator intervenes when the virtual operation command generator 103 generates the virtual operation command depending on at least one of the virtual subject model or the virtual sensor input. For example, when the virtual sensor input is an image, the image is presented to the operator to cause the operator to specify a point to be a target in generating the virtual operation command. In such a method, experience and decision of the operator being a person are reflected on the virtual operation command by a simple method. In any case, as the method of generating the virtual operation command, any appropriate method may be selected depending on properties of the subjects 402 and the sensor 404, for example.

The machine learning data generation device 1 according to this embodiment further includes the simulator 104 and the achievement status evaluator 105. The simulator 104 and the achievement status evaluator 105 correspond to the virtual operation outcome evaluator 116 illustrated in FIG. 1.

The simulator 104 executes physical simulation of the physical work. In other words, a virtual operating machine model, which is a virtual model of the operating machine 403 of a real work machine 4, is prepared in advance in the simulator 104, the virtual operating machine model and the virtual subject models are arranged on the virtual space of the simulator 104, and the virtual operating machine model is caused to operate in accordance with the virtual operation command to simulate the physical work to be performed by the work machine 4 on the virtual space. It should be understood that the arrangement of the virtual operating machine model and the virtual subject models on the virtual space reproduces a situation in which the virtual sensor input is generated in the virtual sensor input generator 102.

As a physics engine used for the physical simulation, one corresponding to assumed physical work may be used. When gripping of the subject 402 is assumed as in this example, a physics engine that can execute collision determination and dynamic simulation may be selected or built, and when the physical work is different, it should be understood that a physics engine that performs fluid simulation or destruction simulation, or that simulates any other physical phenomenon is selected or built as appropriate.

When the simulation in the simulator 104 is complete, a result of the simulation is evaluated as to an achievement status thereof by the achievement status evaluator 105. The term "achievement status" as used herein is a measure for evaluating a degree by which an object of the physical work is achieved. This measure may be two-level, continuous evaluation, or stepwise evaluation. In the case of this example, two-level evaluation of whether the gripping succeeded or failed may be performed. In addition, for example, when the subject 402 is an amorphous meat mass, and the physical work is to cut the meat mass into "n" equal parts, unevenness of weights of cut meat pieces may be the achievement status, or stepwise evaluation depending on a degree of the unevenness or achievement of the object may be performed. As the stepwise evaluation, the achievement status may be three-level evaluation of poor, good, and good depending on the magnitude of unevenness of the weights of the meat pieces, or may be a multi-level evaluation with differences in quality, for example, the cutting failed, the cutting succeeded but unevenness of the meat pieces was outside an allowable range, the cutting succeeded and unevenness of the meat pieces is within the allowable range.

As already described, the physics engine is used in the simulation in the simulator 104, and hence in such a case in which the virtual subject models related to the plurality of variations, for example, pieces of fried chicken, are randomly piled as exemplified above, not only interaction between the virtual subject model selected to be the subject of the physical work and the virtual operating machine model, but also interaction between other virtual subject models that have not been selected as the subjects of the physical work and the virtual operating machine model, for example, interference due to collision, is also reflected on the achievement status. In other words, while there may be a case in which, even with the virtual operation command with which the physical work could have been carried out successfully on a single virtual subject model even when the variations in physical characteristics thereof are taken into consideration, the work ends up unsuccessfully due to the effect that a plurality of virtual subject models are randomly piled, in the machine learning data generation device 1 according to this embodiment, the achievement status of the physical work in the virtual space is correctly evaluated as if the physical work is real physical work.

Finally, in the machine learning data generator 106, the virtual sensor input generated by the virtual sensor input generator 102, the virtual operation command generated by the virtual operation command generator 103, and the achievement status evaluated by the achievement status evaluator 105 are linked to one another to obtain the machine learning data.

In the machine learning data generation device 1, one or a plurality of sets of machine learning data can be generated for each virtual subject model of the plurality of variations of the subjects 402, which is generated by the virtual model generator 101, and a large number of different sets of machine learning data can be obtained easily and in a range of realistic time and cost. In addition, even in the case of the physical work for which an outcome is not obvious from the subjects 402 and the operation expected for the subjects 402, that is, the operation command, the outcome of the physical work is estimated with high probability by the physical simulation by the simulator 104, and the result of evaluation is reflected on the machine learning data.

Further, the machine learning device 2 includes the machine learning data generation device 1 and the learning unit 201 described above, and performs learning of the neural network model 407 to be used in the operation command generator 406 of the work machine 4 with use of the machine learning data generated by the machine learning data generation device 1. The learning unit 201 causes the neural network model, which is a neural network to which a sensor input is input and from which the operation command is output, based on the machine learning data depending on the achievement status. Thus, in the machine learning device 2, the machine learning reflecting the outcome of the physical work is performed in the practical range of time and cost without necessarily requiring real physical work.

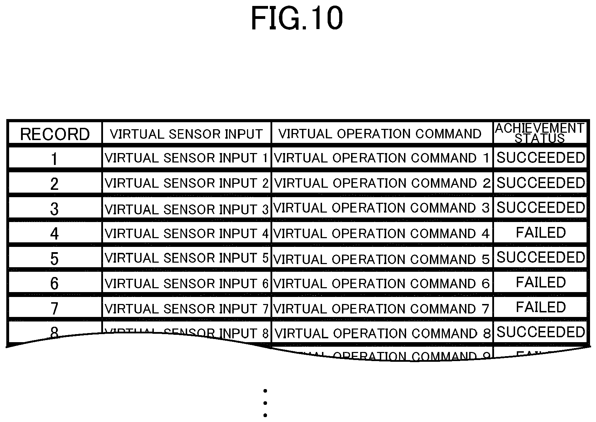

FIG. 10 is a diagram for illustrating an example of a configuration of the machine learning data generated by the machine learning data generation device 1. Each one record illustrated in the figure corresponds to one set of machine learning data, and each record includes a virtual sensor input, the virtual operation command, and the achievement status. In the following description, the virtual sensor input and the virtual operation command which belong to the same record are distinguished by suffixing a record number as required.

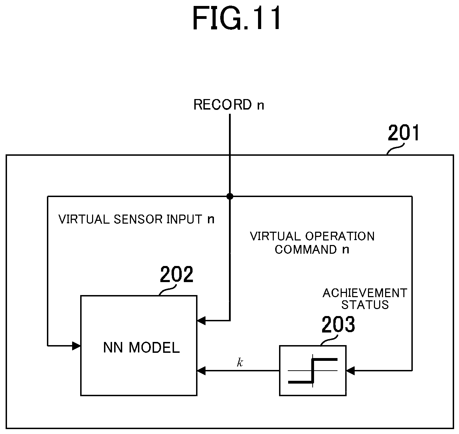

FIG. 11 is a configuration diagram for illustrating a configuration of the learning unit 201. The learning unit 201 has a neural network model 202 stored therein. The neural network model 202 is a model intended to be used as the neural network model 407 in the operation command generator 406 of the work machine 4 in the future after the learning is complete.

To the learning unit 201, the machine learning data is input. FIG. 11 shows a state in which a record "n" is input as the machine learning data, and in the record "n", learning of the neural network model 202 is performed with a virtual sensor input "n" being a question to the neural network model 202, and with a virtual command "n" being an answer to the question. At this time, the achievement status of the record "n" is converted into a coefficient "k" by a filter 203, and is used for the learning of the neural network model 202.

The coefficient "k" indicates permission/prohibition of learning of the neural network model 202 with the machine learning data of the record "n", a positive or negative direction of learning, or an intensity thereof. Consequently, it can be said that the learning unit 201 causes the neural network model 202 to learn depending on the achievement status.

The specific method of using "k" during learning is not necessarily limited. As an example, when the learning unit 201 performs both learning in the positive direction and learning in the negative direction, it may be considered that codes for performing learning in the respective directions are prepared separately, the code for learning in the positive direction is executed when k>0, and the code for learning in the negative direction is executed when k<0, for example, depending on the value of "k". In that case, when k=0, whether to learn in the positive direction or the negative direction may be suitably determined in advance, or the learning may not be performed with the record.

Alternatively, when a learning rate in a (stochastic) gradient descent method in the learning of the neural network model 202 is defined as "$\eta$", and when a predetermined learning rate is represented by $\eta_0$, the following equation may be satisfied:

[Math. 1]

$$\eta = k\eta_0$$

In this case, learning in the positive direction is performed when "k" is positive, learning in the negative direction is performed when "k" is negative, and learning is not performed when k=0. When such a method is used, whether or not to perform learning, whether the learning is performed in the positive direction or the negative direction, and the intensity thereof can be designed freely, including learning with an intermediate intensity, by appropriately designing a shape of the filter 203.

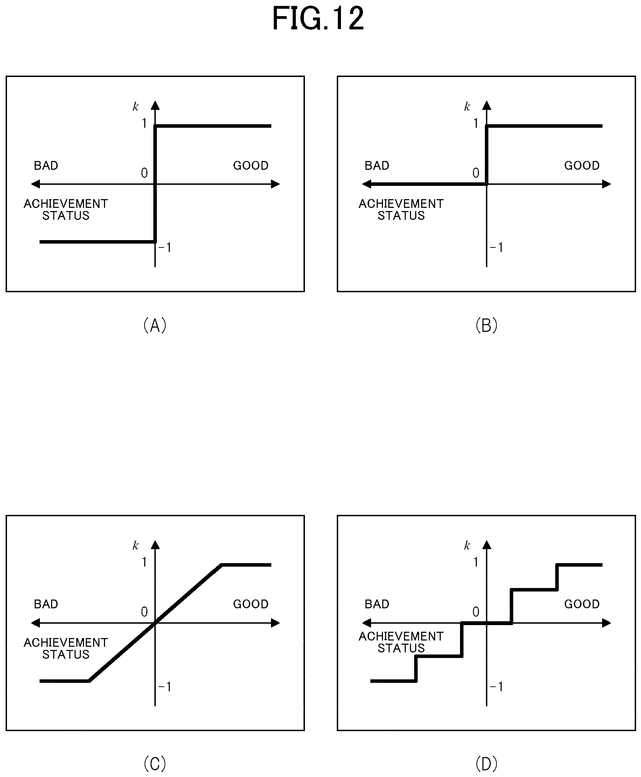

FIG. 12 is a diagram for illustrating examples of various shapes of the filter 203. A filter of part (A) shown in the figure is configured to perform learning in the positive direction when the achievement status indicates "good", and to perform learning in the negative direction when the achievement status indicates "bad". In this manner, when both a region in which "k" is positive and a region in which "k" is negative are included, it can be said that the filter 203 functions as a learning direction determiner which determines whether the learning with the machine learning data is to be performed in the positive direction or the negative direction depending on the achievement status.

A filter of part (B) is configured to perform only learning in the positive direction only when the achievement status indicates "good". In this manner, when a region in which k=0 is included, it can be said that the filter 203 functions as a learning permission/prohibition determiner which determines the permission/prohibition of learning with the machine learning data depending on the achievement status.

A filter of part (C) is configured so that the coefficient "k" is changed continuously depending on the achievement status. In this manner, when a region in which the value of "k" takes an intermediate value (value other than 1, 0, or -1) is included, it can be said that the filter 203 functions as a learning intensity determiner which determines an intensity of learning with the machine learning data depending on the achievement status. Further, this filter includes both a region in which "k" is positive and a region in which "k" is negative at the same time, and also includes a region in which k=0, and hence it can be said that the filter 203 also functions as a learning direction determiner and a learning permission/prohibition determiner at the same time.

A filter of part (D) is configured so that the coefficient "k" changes stepwise depending on the achievement status. Also in this case, as with the filter of part (C), it can be said that the filter 203 functions as a learning intensity determiner, a learning direction determiner, and a learning permission/prohibition determiner at the same time.

As can be seen in the filters of parts (C) and (D), when the achievement status is not "good" or "bad", or a distinction thereof is not clear, the value of "k" is set to 0 or a value having a small absolute value around 0. In this manner, a situation is prevented in which useless learning is performed with machine learning data that does not contribute or makes little contribution to increasing learning accuracy to inhibit learning of the neural network model 202 on the contrary.

As described above, by appropriately designing the filter 203, and determining at least one of the permission/prohibition, the direction, or the intensity of the learning depending on the achievement status included in the machine learning data, the result of simulation in the simulator 104 can be appropriately reflected on the learning of the neural network model 202, and increases in effectiveness of learning and convergence speed can be expected. Further, when the permission/prohibition and the direction of the learning are determined with use of the filter 203, it is not required to prepare a code for each case of the permission/prohibition and the direction of learning. As a result, the machine learning device 2 is productive.

The filter 203 is not necessarily an essential component in the learning unit 201, and the achievement status may be directly used in the learning of the neural network model 202. In that case, it can be regarded that "1" is provided as the filter 203.

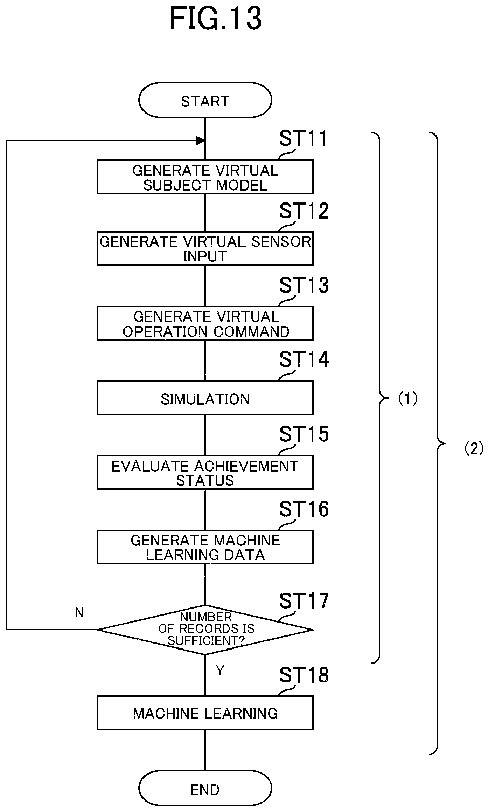

FIG. 13 is a flow chart of the machine learning data generation method and a machine learning method performed by the machine learning data generation device 1 and the machine learning device 2 according to this embodiment. In a flow illustrated in the figure, part (1) (Step ST11 to Step ST17) corresponds to the machine learning data generation method, and part (2) (Step ST11 to Step ST18) corresponds to the machine learning method.

First, in Step ST11, virtual subject models for the plurality of variations of the subjects 402 are generated by the virtual model generator 101. In subsequent Step ST12, a virtual sensor input is generated based on the virtual subject models by the virtual sensor input generator 102. Further, in Step ST13, the virtual operation command is generated based on at least one of the virtual subject models and the virtual sensor input by the virtual operation command generator 103.

In Step ST14, computer simulation of the physical work is executed based on the virtual operation command with use of the virtual operating machine model and the virtual subject models by the simulator 104. Then, in Step ST15, the achievement status of the object of the physical work as a result of the computer simulation is evaluated by the achievement status evaluator 105. The process proceeds to Step ST16, and in Step ST16, the machine learning data is generated based on the virtual sensor input, the virtual operation command, and the achievement status by the machine learning data generator 106.

The generated sets of machine learning data are accumulated as records. In Step ST17, it is determined whether the number of records, that is, the number of accumulated sets of machine learning data, is sufficient, and when the number of records is not sufficient (Step ST17: N), the process returns to Step ST11, and the machine learning data is generated repetitively. When the number of records is sufficient (Step ST17: Y), the process proceeds to Step ST18. As the required number of records, a target number may be determined in advance. Alternatively, a result of the machine learning in Step ST18 is evaluated, and when the learning is not sufficient, Step ST11 to Step ST17 may be executed again to additionally generate the machine learning data. The evaluation of the result of the machine learning may be performed by evaluating convergence of an internal state of the neural network model 202 in the learning unit 201, or by inputting test data to the neural network model 202, and by an accuracy rate of the obtained output.

In Step ST18, the neural network model 202 is caused to learn based on the generated machine learning data by the learning unit 201 depending on the achievement status. In this manner, in this embodiment, the neural network model 202 that has learned and is suitable for the work machine 4 is obtained.

In the machine learning data generation device 1 and the machine learning device 2 according to the first embodiment of the present invention described above, as the method of generating the virtual operation command by the virtual operation command generator 103, description has been given of a method involving using a deterministic algorithm using both the virtual subject models and the virtual sensor input. In the following, as the machine learning data generation device 1 and the machine learning device 2 according to a second embodiment of the present invention, and as a method of generating the virtual operation command by the virtual operation command generator 103, an example using a nondeterministic algorithm is used.

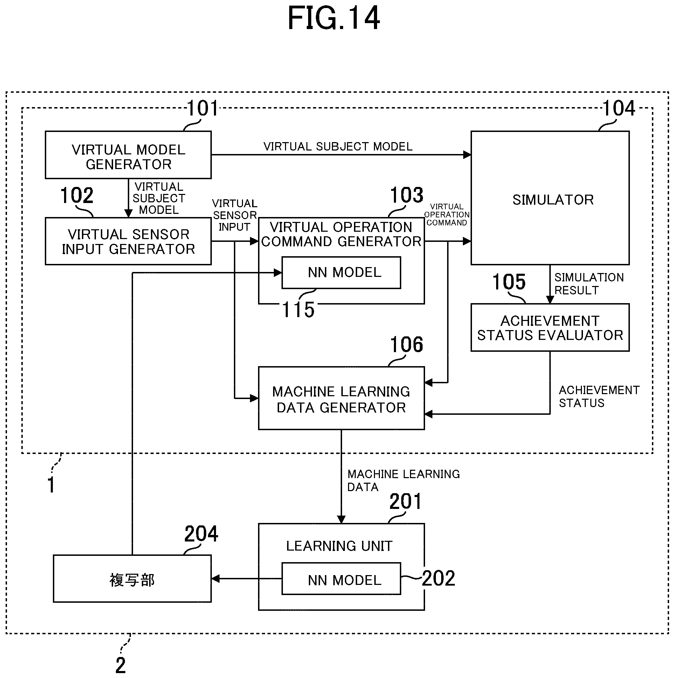

FIG. 14 is a functional block diagram for illustrating an overall configuration of the machine learning device 2 including the machine learning data generation device 1 according to the second embodiment of the present invention. For simplifying description of this embodiment, components that are the same or correspond to those in the above-mentioned embodiment are denoted by the same reference symbols, and duplicate description thereof is omitted.

The virtual operation command generator 103 according to this embodiment includes a neural network model 115. This neural network model 115 is included in the learning unit 201, and as with the neural network model 202 to be subjected to learning, a sensor input (or the virtual sensor input) is input thereto, and the operation command (or the virtual operation command) is output therefrom. Relationship between the neural network model 115 and the neural network model 202 is described later.

The neural network model 115 has undergone some learning in advance. In other words, when some sensor input or virtual sensor input is input thereto, a certain level of operation command or virtual operation command can be output therefrom. The term "certain level" as used herein is used to mean that, when the operating machine 403 of the work machine 4 is caused to operate by the operation command output from the neural network model 115, or the simulation by the simulator 104 is executed by the virtual operation command output from the neural network model 115, the object of the physical work is achieved, or even when the achievement is not reached, a result that can be considered to be close to the achievement is obtained.

Inference using the neural network model 115 is a nondeterministic algorithm, and hence this example describes an example of a method of generating the virtual operation command by the virtual operation command generator 103 with use of the nondeterministic algorithm. When it is hard or difficult to obtain the certain level of virtual operation command that can be used for learning by a deterministic algorithm, such a method is effective.

Further, as the neural network model 115 used in the virtual operation command generator 103, and the neural network model 202 to be subjected to learning in the learning unit 201, the same neural network model may be used at the start of the generation of the machine learning data and the machine learning in this embodiment. For example, a neural network model (which may be the neural network model 407 illustrated in FIG. 5) that has learned using a real work machine 4 with use of some, but not necessarily a large number of, real subjects 402 may be used as initial models. Alternatively, a neural network model that has not learned at all may be used as the initial models, or further, a neural network model that has proceeded with learning to a certain extent with artificially produced machine learning data may be used as those initial models.

It is considered that, when the machine learning data is generated with use of the machine learning data generation device 1 including the virtual operation command generator 103 including such a neural network model 115, and the machine learning is further caused to proceed with use of such machine learning data by the machine learning device 2, the learning of the neural network model 202 proceeds in the learning unit 201, and accuracy of the operation command or the virtual operation command obtained by the neural network model 202, that is, likelihood that the object of the physical work is achieved when the operation command or the virtual operation command is used, is increased.

In the stage in which the learning of the neural network model 202 has proceeded as described above, a duplicator 204 overwrites and updates the neural network model 115 with the neural network model 202. As a result, the accuracy of the virtual operation command generated by the virtual operation command generator 103 is gradually increased, and hence it is expected that the learning of the neural network model 202 proceeds more efficiently and converges faster.

The update of the neural network model 115 by the duplicator 204 may be performed at appropriate timings. For example, the update may be performed at timings when learning with a certain number of records of the machine learning data is performed. Alternatively, the progress of the learning of the neural network model 202 may be monitored, and the update may be performed at timings based on some measure, for example, a convergence constant.

Still alternatively, the neural network model 115 may be updated for each record, that is, every time learning with one set of machine learning data is performed by the learning unit 201. In that case, instead of the configuration illustrated in FIG. 14, a configuration may be employed in which, without providing the duplicator 204, the virtual operation command generator 103 and the learning unit 201 directly refer to common neural network models 115 and 202 on a memory.

In the first and second embodiments described above, the description has been given of the example of gripping by the operating machine 403 as the physical work, and hence the virtual sensor input generator 102 is configured to generate the virtual sensor input from the planar projection image of the virtual subject model. However, the method of generating the virtual sensor input is not limited as long as the virtual sensor input is based on the virtual subject model, and an appropriate virtual sensor input may be selected or designed to correspond to the subjects 402 or the physical work.

As an example, when the physical work is grinding work for deburring a metal part, and the operation command to be obtained is a time profile of a pressing force of a grindstone that corresponds to a shape of a burr, the virtual sensor input generator 102 may perform simulation on the virtual subject model by a tentative operation command using the simulator 104, and use the obtained time profile of processing reaction as a virtual sensor input. This corresponds to tentatively grinding with a predetermined pressing force when a real work machine 4 in this example performs deburring, and setting a time profile of a pressing force of finish grinding based on reaction during the tentative grinding.

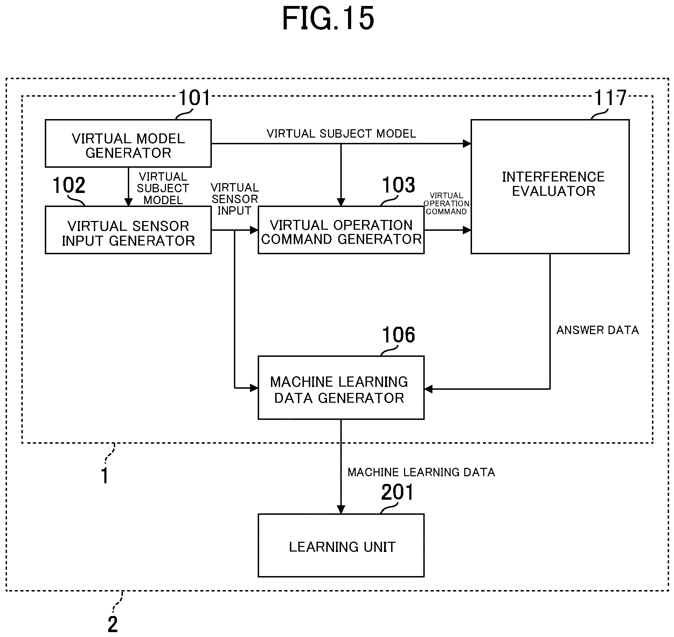

FIG. 15 is a functional block diagram for illustrating an overall configuration of the machine learning device 2 including the machine learning data generation device 1 according to a third embodiment of the present invention. Also in this embodiment, components that are the same or correspond to those in the above-mentioned embodiments are denoted by the same reference symbols, and duplicate description thereof is omitted.

The machine learning data generation device 1 according to this embodiment is different from those of the first and second embodiments described above in that the virtual operation outcome evaluator 116 illustrated in FIG. 1 is replaced by an interference evaluator 117.

The interference evaluator 117 performs evaluation of the outcome of the operation of the physical work performed by the operating machine 403 based on the virtual operation command generated by the virtual operation command generator 103, by evaluating presence or absence of interference between the operating machine 403 and the virtual subject models when the physical work is executed in the virtual space.

In other words, there is also considered a case in which unevenness of the physical characteristics of the virtual subject models is not large as in the example of fried chicken described above, for example, and a case is also expected in which, depending on the property of the physical work, as long as a command on a single virtual subject model is issued correctly, predictability of the result is high. It is considered that, for such physical work, the necessity for evaluating the achievement status using the physical simulation is small.

However, when a plurality of virtual subject models are in a state of being randomly piled, a case occurs in which, even with a virtual operation command with which it is expected that the physical work is executed successfully on a single virtual subject model, the physical work fails due to the presence of a plurality of virtual subject models adjacent thereto. Specifically, the operating machine 403 and other virtual subject models which are not subjected to the physical work may interfere, and the work may fail.

When it is considered that the physical work has the property as described above, it is considered that while, in generating the machine learning data, the evaluation of the outcome of the physical work performed in response to the virtual operation command is still required, the physical simulation of the entire physical work performed by the operating machine 403 is not required. Thus, by using the interference evaluator 117 as the virtual operation outcome evaluator 116 to evaluate the presence or absence of interference between the operating machine 403 and the virtual subject model at a required time point, machine learning data reflecting an outcome of the physical work for which the outcome is not obvious can be obtained without requiring real physical work, and as compared to the case in which the physical simulation is performed, it can be expected that computational load and required time therefor are significantly reduced.

Consequently, the interference evaluator 117 evaluates the presence or absence of interference between the operating machine 403 and the virtual subject model during execution of the physical work. The phrase "during execution of the physical work" as used herein means a time period in which the physical work is executed in the virtual space, and the presence or absence of interference at one or a plurality of time points in the time period is evaluated. What time points are set as the time points should be determined depending on the property of the physical work, and examples thereof include, as exemplified below, in a case of pickup work from vertically above, a time point at which the virtual subject model is to be gripped, and for the physical work in which there are a plurality of timings at which interference is liable to occur, each timing may be set as the time point at which the presence or absence of interference is evaluated.

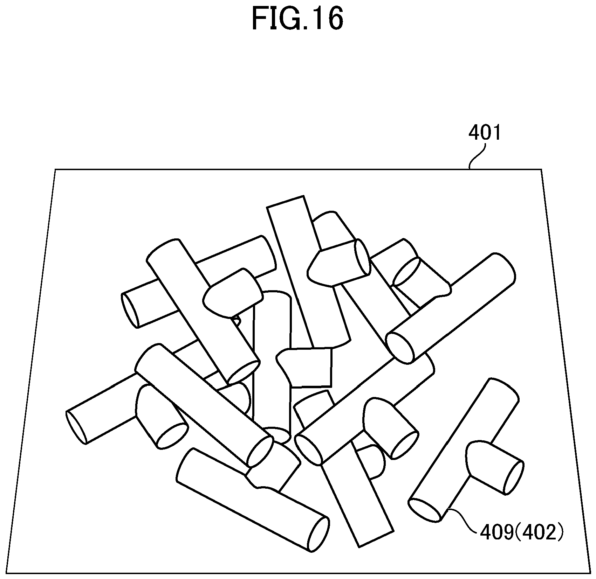

As a specific example of the physical work related to the machine learning device 2 including the machine learning data generation device 1 according to this embodiment, a case is considered in which, as illustrated in FIG. 16, a plurality of parts 409 randomly piled on the rack 401 are used as the subjects 402, and an industrial robot on which a parallel gripper is mounted as an end effector is used as the operating machine 403 to perform pickup. The figure shows virtual subject models generated by the virtual model generator 101 of FIG. 15.

Rigid parts such as mechanical parts are assumed as the parts 409, and in this example, T-shaped metal members are exemplified. Further, the pickup work is performed by the parallel gripper with a protruding portion corresponding to a vertical bar of the letter T being a gripping position. At this time, the parts 409 are piled randomly while overlapping one another on the rack 401, and hence the gripping position may be embedded below other parts 409, face downward, or adjacent parts 409 block and interfere with the parallel gripper. Thus, there are a considerable number of parts 409 that are piled in manners in which the pickup work cannot be executed successfully.

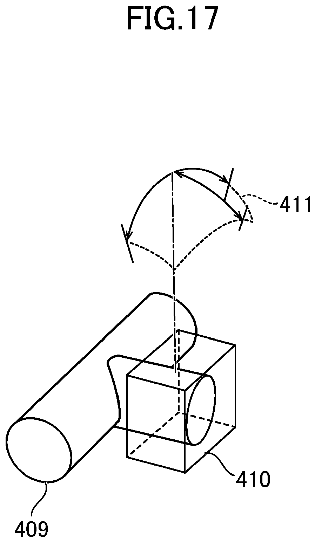

To the virtual operation command generator 103 of FIG. 15, target values of the operating machine 403 with which it is expected that the physical work can be executed on the virtual subject model of a single part 409 are given in advance. FIG. 17 shows an examples of the target values given to the virtual operation command generator 103 in this example. As shown in the figure, when the part 409 is within coordinates of the operating machine 403, that is, a position range 410 in a space of the parallel gripper, which is the end effector, and when a posture, that is, an angle in the space, of the parallel gripper is in an angle range 411 with respect to the part 409, it is considered that the operating machine 403 can successfully pick up the part 409.

The target values, that is, the position range 410 and the angle range 411, are simply given as relative ranges with respect to the virtual subject model as a subject in this example, but the ranges of target values may be given in a suitable manner, and another method may be used. As an example, without limiting to a user using an appropriate graphical user interface (GUI) to specify in advance the relative position range 410 and the relative angle range 411 with respect to the virtual subject model as illustrated in FIG. 17, for sets consisting of the position range 410 and the angle range 411, intersection of a set consisting of ranges of positions and angles obtained by performing mechanical analysis, and one or both of sets consisting of ranges of gripping positions and postures in which the parallel gripper and a single model do not interfere with each other may be used as the target values.

It should be noted, however, that the position range 410 and the angle range 411 are set assuming the subject part 409 to be single, and hence in a situation in which a plurality of parts 409 are randomly piled as in FIG. 16, a part or all of the position range 410 and the angle range 411 obtained for a particular part 409 may include those at which the physical work cannot be executed. Even if the interference with the other parts 409 are not considered, when the posture of the parallel gripper is not achievable in terms of a mechanism of the operating machine 403, for example, for a posture in which the parallel gripper approaches the part 409 from below the rack 401 and a posture which is outside a movable range of the operating machine 403, target values thereof are excluded from the virtual operation command.

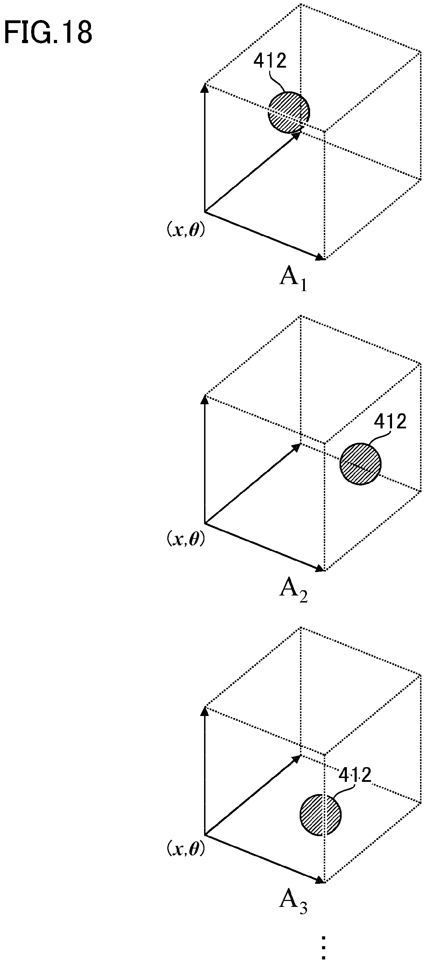

As a result, for each of virtual subject models of the parts 409 generated by the virtual model generator 101, one or a plurality of target values $A_1 ... A_n$, which are virtual operation commands, are generated as illustrated in FIG. 18 by the virtual operation command generator 103.

Here, "n" is the number of virtual subject models generated by the virtual model generator 101, and the subscripts attached to the target values A are numbers identifying the generated virtual subject models. Accordingly, the target values $A_1$ indicate the virtual operation command generated for the 1st virtual subject model, and the same applies to the 2nd to n-th virtual subject models.

In this embodiment, the target values A indicate a correct answer range in an operation command value space $(x, \theta)$, which indicates a range of values that the operation command for the operating machine 403 can take. Here, "x" and "$\theta$" are vectors indicating a position and a posture that the end effector can take by the operating machine 403, in which "x" represents three-dimensional Cartesian coordinates "x", "y", and "z", and "$\theta$" represents Euler angles "$\alpha$", "$\beta$", and "$\gamma$" in this example. Thus, the target values A are a multi-dimensional matrix which maps values distributed in a 6-dimensional space.

Specifically, for the target values $A_1$, the target values $A_2$, and the target values $A_3$ illustrated in FIG. 18, a particular region 412 in the operation command value space $(x, \theta)$ that is schematically illustrated as a hatched region indicates the correct answer range. In other words, as destination position and posture of the operating machine 403, when the coordinates "x", "y", "z", "$\alpha$", "$\beta$", and "$\gamma$" are included in the region 412 indicated by hatching, it is considered that the physical work, that is, pickup by the parallel gripper, can be performed on the target virtual subject model.

The region 412 is obtained by defining ranges of the target values illustrated in FIG. 17 based on coordinates in the virtual space of the virtual subject model generated by the virtual model generator 101. Further, various specific structures of the target values A can be considered, but in this example, the operation command value space (x, θ) is divided with a predetermined resolution, and each section may be assigned "1" when falling within the region 412, or assigned "0" when falling outside the region 412. A section located at the boundary of the region 412 is assigned any one of "1" or "0", or assigned a value between 0 and 1 depending on a volume of the region 412 included in the section.

The target values A for a particular virtual subject model generated by the virtual operation command generator 103 as described above are not generated considering the effect of interference with other virtual subject models. Thus, in this embodiment, presence or absence of interference between the operating machine 403 and the virtual subject model is further evaluated by the interference evaluator 117.

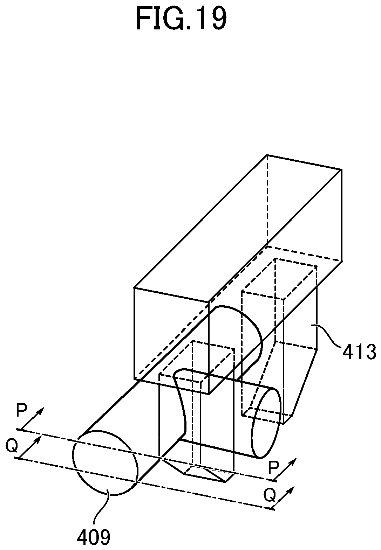

The evaluation of the presence or absence of interference is performed by determining whether an overlap between the objects occurs at the time when the operating machine 403 is placed with respect to the particular virtual subject model in the virtual space. FIG. 19 is a view for illustrating how the presence or absence of interference in the virtual space is evaluated. The figure schematically shows how a 3D model of the operating machine 403, in this example, an end effector 413, which is a parallel gripper provided at a distal end thereof, is placed with respect to a part 409, which is a particular virtual subject model. In order to facilitate understanding of a positional relationship between the part 409 and the end effector 413, the end effector 413 is illustrated as a wire frame model in the figure.

In this example, the end effector 413 is placed at a position and a posture indicated by particular target values A. Then, under that state, intersection between a 3D object forming the end effector 413 and 3D objects of parts 409 including other not-shown parts 409 is obtained. When a result is not an empty set, it is found that interference has occurred, and that the physical work with the position and the posture included in the target values A cannot be executed.

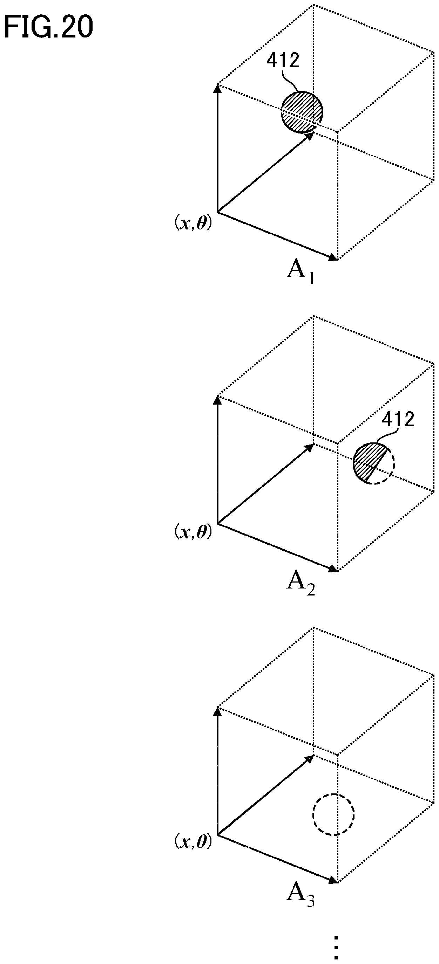

The evaluation of the presence or absence of interference is performed for all the obtained target values A. As a result, a virtual operation command incorporating the evaluation, that is, answer data forming the machine learning data to be obtained, is generated. FIG. 20 is a diagram for schematically illustrating examples of the answer data obtained by incorporating the evaluation into the target values A.

The answer data illustrated in FIG. 20 is obtained by incorporating the evaluation of the presence or absence of interference into the target values illustrated in FIG. 18. More specifically, the answer data is obtained by deleting, from the region 412, which is a range of target values included in the target values A generated by the virtual operation command generator 103, a portion in which the physical work cannot be executed due to the interference.

In the example of FIG. 20, for the target values $A_1$, there is no portion in which the physical work cannot be executed due to the interference, and hence there is no change in the region 412. In contrast, for the target values $A_2$, a portion in which interference occurs partially exists, and hence the region 412 is partially deleted and becomes smaller. For the target values $A_3$, interference occurs in the entire region, and hence the region 412 is deleted and does not exist anymore. Similarly, the interference is incorporated for all the obtained target values A to correct the region 412.

Returning to FIG. 15, the machine learning data generator 106 generates the machine learning data by using the virtual sensor input generated by the virtual sensor input generator 102 as question data, and paring the question data with the answer data obtained from the interference evaluator 117. Thus, when a real sensor input is input to the machine learning model which undergoes learning by the learning unit 201, the machine learning model undergoes learning so as to output the target values A similar to those illustrated in FIG. 20. Consequently, it is expected that, by causing the real operating machine 403 to operate based on the output target values A, the physical work, that is, pickup of the parts 409, can be executed without causing interference.

In the above description, when it is evaluated that the region 412 partially includes a portion in which interference occurs for some particular target values A, the answer data is produced by deleting the corresponding portion from the region 412, but when the portion in which interference occurs is included in the region 412 partially or in a certain proportion or more, a measure that the entire region 412 is deleted may be taken. Further, as the answer data, only the target values A for which the region 412 at least remains may be used, and the target values A (for example, the target values $A_3$ of FIG. 20) for which the region 412 does not exist may not be used. Alternatively, the target values A for which the region 412 does not exist may also be used as the answer data, or union of the target values $A_1$ to $A_n$ may be used as the answer data.

Further, in the above description, the presence or absence of interference is evaluated using logical operation between 3D objects, but another method, for example, a simpler method, may be used. For example, a method of evaluating the presence or absence of interference in one or a plurality of predetermined cross sections may be used.

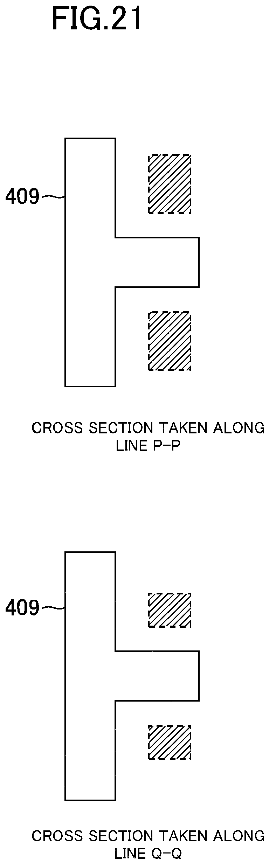

As an example, a method of evaluating the presence or absence of interference using two cross sections taken along the lines P-P and Q-Q of FIG. 19 is described with reference to FIG. 21. In the cross section taken along the line P-P, which is illustrated in FIG. 21, with respect to a region in which the part 409 exists, the region indicated by hatching is a region in which the end effector 413 of the operating machine 403 exists.

Accordingly, it can be evaluated that, when other parts 409 do not exist in the hatched region, no interference has occurred in the cross section taken along the line P-P. Similarly in the cross section taken along the line Q-Q, it can be evaluated that, when other parts 409 do not exist in the region indicated by hatching in which the end effector 413 exists, no interference has occurred in the cross section taken along the line Q-Q. Consequently, when no interference has occurred in both of the cross sections taken along the lines P-P and Q-Q, it is evaluated that no interference occurs.

The number of cross sections to be evaluated, and positions and orientations thereof are freely selected, and may be determined depending on shapes of the parts 409 and the operating machine 403 as appropriate. As described above, with the method of evaluating the presence or absence of interference in the cross sections, evaluation of interference in entirety can be performed by the determination of the presence or absence of interference in 2-dimensional planes, and hence a load of information processing can be suppressed to a low level as compared to determination of the presence or absence of interference in a 3-dimensional space. In contrast, for the parts 409 and the operating machine 403 having complicated shapes, the presence or absence of interference can be evaluated more accurately by the method of determining the presence or absence of interference in the 3-dimensional space described above.

As described above in this embodiment, by using the target values indicating the region 412 in the operation command value space of the operating machine 403 as the virtual operation command, the target values can be generated for each virtual subject model, and the answer data forming the machine learning data can be obtained easily while incorporating the evaluation of the presence or absence of interference.

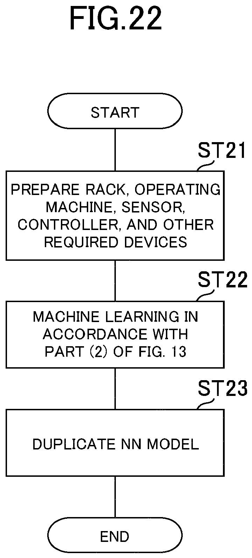

Through mounting of the neural network model 202 that has learned, which is obtained by the machine learning device 2 described above, the work machine 4 which achieves the object with high probability can be obtained. FIG. 22 is a flow chart for illustrating steps of manufacturing the work machine 4.

First, in Step ST21, the rack 401, the operating machine 403, the sensor 404, the controller 405, and other devices required for forming the work machine 4 are prepared. At this time, work required for physically forming the work machine 4, for example, connection, joining, and wiring of the devices, is performed.

Subsequently, in Step ST22, in accordance with the flow illustrated in part (2) of FIG. 13, the machine learning data is generated, and the machine learning is performed based on the machine learning data, to thereby obtain the neural network model 202 that has learned.

Finally, in Step ST23, the obtained neural network model 202 is duplicated to the operation command generator 406 of the work machine 4 to obtain the neural network model 407. In this manner, the work machine 4 which performs the physical work for which the outcome of the physical work is not obvious from the subjects and the operation expected for the subjects is manufactured without performing learning through real physical work, or while reducing the learning through real physical work.

Then, when considering a work system including the machine learning device 2 illustrated in FIG. 2 and the work machine 4 illustrated in FIG. 4 and FIG. 5, in the work system, the machine learning on the physical work is performed by the machine learning device 2 without performing learning through real physical work, or while reducing the learning through real physical work, and in the work machine 4, the physical work reflecting the outcome of the machine learning is performed. Consequently, by using the work system, the physical work for which the outcome of the physical work is not obvious from the subjects and the operation expected for the subjects is executed automatically and with high accuracy within a range of realistic cost and time.

Further, in the above description, in the machine learning device 2 according to the first to third embodiments described above, the learning of the neural network, to which the sensor input is input and from which the operation command is output, is performed in the learning unit 201 based on the machine learning data generated by the machine learning data generation device 1, but the method of using the machine learning data generated by the machine learning data generation device 1 is not necessarily limited to that described above. For example, one or a plurality of virtual operation commands may be generated from the virtual sensor input included in the machine learning data generated by the machine learning data generation device 1, and the generated virtual operation commands may be used for learning of the neural network model which is selected or evaluated based on the answer data included in the machine learning data. Similarly, instead of using the answer data included in the machine learning data as it is for the learning of the neural network model, the answer data may be converted into a different format, or different data may be generated from the answer data for use in the learning of the neural network model, for example.

## Claims

1. A machine learning data generation device, comprising:

   a virtual sensor input generator configured to generate a virtual sensor input, obtained by virtually generating a sensor input as a result of performing sensing by a sensor of a work machine, on a plurality of randomly piled subjects to be subjected to physical work by an operating machine of the work machine based on virtual subject models which are virtual models of the plurality of randomly piled subjects;
   a virtual operation command generator configured to generate a virtual operation command which is obtained by virtually generating an operation command for the operating machine of the work machine depending on at least one of the virtual subject models or the virtual sensor input;

a virtual operation outcome evaluator configured to evaluate an outcome of the physical work performed by the operating machine of the work machine in response to the virtual operation command in a virtual space; and

a machine learning data generator configured to generate machine learning data based on the virtual sensor input, the virtual operation command, and the evaluation of the virtual operation outcome evaluator.

2. The machine learning data generation device according to claim 1,

wherein the virtual operation outcome evaluator includes:

a simulator configured to execute computer simulation of the physical work based on the virtual operation command with use of a virtual operating machine model which is a virtual model of the operating machine, and the virtual subject models; and

an achievement status evaluator configured to evaluate an achievement status of an object of the physical work based on a result of the computer simulation, and

wherein the machine learning data generation device is configured to use the achievement status as the evaluation of the virtual operation outcome evaluator.

3. The machine learning data generation device according to claim 1,

wherein the virtual operation outcome evaluator includes an interference evaluator configured to evaluate a presence or absence of interference between the operating machine and the virtual subject models during execution of the physical work in a virtual space, and

wherein the machine learning data generation device is configured to use the presence or absence of interference as the evaluation of the virtual operation outcome evaluator.

4. The machine learning data generation device according to any one of claims 1 to 3, further comprising a virtual model generator configured to generate the virtual subject models for a plurality of variations of the plurality of randomly piled subjects.

5. A machine learning data generation device, comprising:

a virtual sensor input generator configured to generate a virtual sensor input, obtained by virtually generating a sensor input as a result of performing sensing by a sensor of a work machine, on a subject to be subjected to physical work by an operating machine of the work machine based on a virtual subject model which is a virtual model of the subject;

a virtual operation command generator configured to generate a virtual operation command which is obtained by virtually generating an operation command for the operating machine of the work machine depending on at least one of the virtual subject model or the virtual sensor input;

a simulator configured to execute a computer simulation of the physical work based on the virtual operation command with use of a virtual operating machine model which is a virtual model of the operating machine, and the virtual subject model;

an achievement status evaluator configured to evaluate an achievement status of an object of the physical work based on a result of the computer simulation; and

a machine learning data generator configured to generate machine learning data based on the virtual sensor input, the virtual operation command, and the achievement status.

6. A machine learning device, comprising:

the machine learning data generation device of any one of claims 1 to 4; and

a learning unit configured to cause an operation command generation neural network model, which is a neural network to which the sensor input is input and from which the operation command is output, to learn based on the machine learning data depending on the evaluation of the virtual operation outcome evaluator.

7. The machine learning device according to claim 6, wherein the learning unit includes a learning permission/prohibition determiner configured to determine a permission/prohibition of learning with the machine learning data depending on the evaluation of the virtual operation outcome evaluator.

8. The machine learning device according to claim 6 or 7, wherein the learning unit includes a learning direction determiner configured to determine whether learning with the machine learning data is learning in a positive direction or learning in a negative direction depending on the evaluation of the virtual operation outcome evaluator.

9. The machine learning device according to any one of claims 6 to 8, wherein the learning unit includes a learning intensity determiner configured to determine an intensity of learning with the machine learning data depending on the evaluation of the virtual operation outcome evaluator.

10. The machine learning data generation device according to any one of claims 1 to 5, wherein the virtual operation command generator includes a virtual operation command generation neural network model which is a neural network model to which the virtual sensor input is input and from which the virtual operation command is output.

11. The machine learning device according to any one of claims 6 to 9, wherein the virtual operation command generator includes a virtual operation command generation neural network model which is a neural network model to which the virtual sensor input is input and from which the virtual operation command is output.

12. The machine learning device according to claim 11, wherein the virtual operation command generation neural network model is the same as the operation command generation neural network model, or the virtual operation command generation neural network model is updated by the operation command generation neural network model learned in the learning unit.

13. A work system, comprising:

the machine learning device of any one of claims 6 to 9, 11, and 12; and
the work machine including:

the operating machine;
the sensor; and
an operation command generator which includes the neural network model learned by the learning unit of the machine learning device, to which a sensor input from the sensor is input, and from which an operation command for the operating machine is output.

14. A computer program for causing a computer to operate as a machine learning data generation device, the machine learning data generation device including:

a virtual sensor input generator configured to generate a virtual sensor input, obtained by virtually generating a sensor input as a result of performing sensing by a sensor of a work machine, on a plurality of randomly piled subjects to be subjected to physical work by an operating machine of the work machine, based on virtual subject models which are virtual models of the plurality of randomly piled subjects;
a virtual operation command generator configured to generate a virtual operation command, which is obtained by virtually generating an operation command for the operating machine of the work machine, depending on at least one of the virtual subject models or the virtual sensor input;
a virtual operation outcome evaluator configured to evaluate an outcome of the physical work performed by the operating machine of the work machine in response to the virtual operation command in a virtual space; and
a machine learning data generator configured to generate machine learning data based on the virtual sensor input, the virtual operation command, and the evaluation of the virtual operation outcome evaluator.

15. A machine learning data generation method, comprising:

generating a virtual sensor input, which is obtained by virtually generating a sensor input obtained as a result of performing sensing, by a sensor of a work machine, on a plurality of randomly piled subjects to be subjected to physical work by an operating machine of the work machine based on virtual subject models which are virtual models of the plurality of randomly piled subjects;
generating a virtual operation command, which is obtained by virtually generating an operation command for the operating machine of the work machine depending on at least one of the virtual subject models or the virtual sensor input;
evaluating an outcome of the physical work performed by the operating machine of the work machine in response to the virtual operation command in a virtual space; and
generating machine learning data based on the virtual sensor input, the virtual operation command, and the evaluation.

16. A method of manufacturing a work machine, the work machine including:

an operating machine configured to perform physical work on a plurality of randomly piled subjects;
a sensor configured to perform sensing on the plurality of randomly piled subjects to obtain a sensor input; and
an operation command generator configured to input the sensor input to a neural network model to obtain an operation command for the operating machine,

the method comprising:

generating a virtual sensor input which is obtained by virtually generating the sensor input based on virtual subject models which are virtual models of the plurality of randomly piled subjects;

generating a virtual operation command which is obtained by virtually generating the operation command depending on at least one of the virtual subject models or the virtual sensor input;

evaluating an outcome of the physical work performed by the operating machine of the work machine in response to the virtual operation command in a virtual space;

generating machine learning data based on the virtual sensor input, the virtual operation command, and the evaluation; and

causing the neural network model to learn based on the machine learning data.

# FIG.1

# FIG.2

# FIG.3

301
CPU

302
RAM

303
EXTERNAL
STORAGE
DEVICE

307

304
GC

305
INPUT
DEVICE

306
I/O

308

3

# FIG.4

# FIG.5

405

406

408

OPERATION
COMMAND
GENERATOR

OPERATING
MACHINE
CONTROL UNIT

OPERATION
COMMAND

NN MODEL

407

POWER

403

404

SENSOR INPUT

OPERATING
MACHINE

SENSOR

(PHYSICAL WORK)

(SENSING)

401

SUBJECT 402

SUBJECT 402

SUBJECT 402

SUBJECT 402

SUBJECT 402

SUBJECT 402

4

# FIG.6

101

108

109

$$z \sim N\big(\mu(X), \sigma(X)\big)$$

$$C \sim N\big(\mu(C), \sigma(C)\big)$$

$z$

107

Decoder

$C$

$\hat{X}$

110

$\oplus$

*model*

# FIG.7

5

$x$

501

Encoder

$z$

502

Decoder

$\hat{X}$

# FIG.8

$\hat{X}$

102

112        113

Projector        BG Generator

*Image*   114   *BG*

⊕

111

Generator

*Virtual Sensor Input*

# FIG.9

6

601

*Image + BG*

Generator

*Virtual
Sensor Input*

*Real Sensor Input*

Discriminator ~602

*Discrimination*

# FIG.10

| RECORD | VIRTUAL SENSOR INPUT | VIRTUAL OPERATION COMMAND | ACHIEVEMENT STATUS |
|---|---|---|---|
| 1 | VIRTUAL SENSOR INPUT 1 | VIRTUAL OPERATION COMMAND 1 | SUCCEEDED |
| 2 | VIRTUAL SENSOR INPUT 2 | VIRTUAL OPERATION COMMAND 2 | SUCCEEDED |
| 3 | VIRTUAL SENSOR INPUT 3 | VIRTUAL OPERATION COMMAND 3 | SUCCEEDED |
| 4 | VIRTUAL SENSOR INPUT 4 | VIRTUAL OPERATION COMMAND 4 | FAILED |
| 5 | VIRTUAL SENSOR INPUT 5 | VIRTUAL OPERATION COMMAND 5 | SUCCEEDED |
| 6 | VIRTUAL SENSOR INPUT 6 | VIRTUAL OPERATION COMMAND 6 | FAILED |
| 7 | VIRTUAL SENSOR INPUT 7 | VIRTUAL OPERATION COMMAND 7 | FAILED |
| 8 | VIRTUAL SENSOR INPUT 8 | VIRTUAL OPERATION COMMAND 8 | SUCCEEDED |

:

# FIG.11

RECORD n

201

VIRTUAL SENSOR INPUT n

VIRTUAL OPERATION
COMMAND n

202

ACHIEVEMENT
STATUS

203

NN MODEL

$k$

# FIG.12

(A)

(B)

(C)

(D)

# FIG.13

START

ST11
GENERATE VIRTUAL
SUBJECT MODEL

ST12
GENERATE VIRTUAL SENSOR
INPUT

ST13
GENERATE VIRTUAL
OPERATION COMMAND

ST14
SIMULATION

ST15
EVALUATE ACHIEVEMENT
STATUS

ST16
GENERATE MACHINE
LEARNING DATA

ST17
NUMBER
OF RECORDS IS
SUFFICIENT?

N

Y

ST18
MACHINE LEARNING

END

(1)

(2)

# FIG.14

VIRTUAL MODEL GENERATOR — 101

VIRTUAL SUBJECT MODEL

VIRTUAL SENSOR INPUT GENERATOR — 102

VIRTUAL SUBJECT MODEL

VIRTUAL SENSOR INPUT

VIRTUAL OPERATION COMMAND GENERATOR — 103

NN MODEL — 115

SIMULATOR — 104

VIRTUAL OPERATION COMMAND

SIMULATION RESULT

ACHIEVEMENT STATUS EVALUATOR — 105

ACHIEVEMENT STATUS

MACHINE LEARNING DATA GENERATOR — 106

MACHINE LEARNING DATA

1

LEARNING UNIT — 201

NN MODEL — 202

複写部 — 204

2

# FIG.15

# FIG.16

401

409(402)

# FIG.17

409

410

411

FIG.18

412

$(x, \theta)$

$A_1$

412

$(x, \theta)$

$A_2$

412

$(x, \theta)$

$A_3$

$\vdots$

# FIG.19

413

P

Q

P

Q

409

# FIG.20

# FIG.21

409~

CROSS SECTION TAKEN ALONG
LINE P-P

409~

CROSS SECTION TAKEN ALONG
LINE Q-Q

# FIG.22

```
        ┌─────────────┐
        │    START    │
        └─────────────┘
               │                    ST21
   ┌───────────────────────────┐
   │ PREPARE RACK, OPERATING   │
   │    MACHINE, SENSOR,       │
   │ CONTROLLER, AND OTHER     │
   │    REQUIRED DEVICES       │
   └───────────────────────────┘
               │                    ST22
   ┌───────────────────────────┐
   │  MACHINE LEARNING IN      │
   │   ACCORDANCE WITH         │
   │   PART (2) OF FIG. 13     │
   └───────────────────────────┘
               │                    ST23
   ┌───────────────────────────┐
   │                           │
   │   DUPLICATE NN MODEL      │
   │                           │
   └───────────────────────────┘
               │
        ┌─────────────┐
        │     END     │
        └─────────────┘
```

## INTERNATIONAL SEARCH REPORT

| International application No. |
|---|
| PCT/JP2020/040002 |

A.  CLASSIFICATION OF SUBJECT MATTER
B25J13/00(2006.01)i
FI: B25J13/00 Z

According to International Patent Classification (IPC) or to both national classification and IPC

B.  FIELDS SEARCHED

Minimum documentation searched (classification system followed by classification symbols)
B25J13/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | WO 2019;172101 A1 (OMRON CORP.) 12 September 2019 (2019-09-12) paragraphs [0006]-[0118], fig. 2 | 5 |
| Y | paragraphs [0006]-[0118], fig. 2 | 1-4, 6-16 |
| Y | JP 2017-185577 A (FANUC CORPORATION) 12 October 2017 (2017-10-12) paragraphs [0027]-[0030], fig. 1, 3 | 1-4, 6-16 |
| Y | JP 2017-102755 A (IKEGAMI TSUSHINKI CO., LTD.) 08 June 2017 (2017-06-08) paragraphs [0073], [0136] | 1-4, 6-16 |

☐  Further documents are listed in the continuation of Box C.    ☒  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 December 2020 (15.12.2020) | 28 December 2020 (28.12.2020) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

<table>
<tr><td colspan="2">**INTERNATIONAL SEARCH REPORT**<br>Information on patent family members</td><td>International application No.<br>PCT/JP2020/040002</td></tr>
</table>

| Patent Documents referred in the Report | Publication Date | Patent Family | Publication Date |
|---|---|---|---|
| WO 2019/172101 A1 | 12 Sep. 2019 | (Family: none) | |
| JP 2017-185577 A | 12 Oct. 2017 | US 2017/0285584 A1 paragraphs [0033]-[0036], fig. 1, 3 DE 102017002996 A1 CN 107263464 A | |
| JP 2017-102755 A | 08 Jun. 2017 | (Family: none) | |

Form PCT/ISA/210 (patent family annex) (January 2015)

**EP 4 052 869 A1**

## REFERENCES CITED IN THE DESCRIPTION

**Patent documents cited in the description**

- JP 2017185577 A